# EUROPÄISCHE PATENTSCHRIFT

(11) **EP 2 532 061 B1**
(45) Veröffentlichungstag und Bekanntmachung des Hinweises auf die Patenterteilung: **16.07.2014**
(21) Anmeldenummer: 11702204.6
(22) Anmeldetag: 03.02.2011
(51) Int. Cl.: H02G 3/06, H02G 15/04

(54) **ELEKTRISCHES GERÄT MIT EINER DURCHFÜHRUNG EINES KABELS DURCH EINE GEHÄUSEWAND**
ELECTRIC DEVICE COMPRISING A FEEDTHROUGH OF A CABLE THROUGH A HOUSING WALL
APPAREIL ÉLECTRIQUE POURVU D'UN PASSAGE POUR UN CÂBLE À TRAVERS UNE PAROI DE BOÎTIER

(30) Priorität: 06.02.2010 DE 102010007093
(43) Veröffentlichungstag der Anmeldung: 12.12.2012
(73) Patentinhaber: Kostal Industrie Elektrik GmbH, 58513 Lüdenscheid (DE)
(72) Erfinder: KINZL, Niklas, 59494 Soest (DE); SCHMIDT, Kay-Hendryk, 58452 Witten (DE); RILLING, Herwig, 59174 Kamen (DE)
(74) Vertreter: Kerkmann, Detlef
(86) Internationale Anmeldenummer: PCT/EP2011/051597
(87) Internationale Veröffentlichungsnummer: WO 2011/095561

(56) Entgegenhaltungen:
- DE-U1- 20 116 680
- DE-U1- 20 311 183
- DE-U1-202007 001 070

## Beschreibung

Die Erfindung betrifft ein elektrisches Gerät mit einer Durchführung eines Kabels durch eine Gehäusewand, mit einem an der Gehäusewand angeordneten Rohrstutzen, der eine Stirnfläche mit einer Zahnung aufweist, mit einer Überwurfmutter, welche im montierten Zustand eine mit dem Kabel verbundene Hülse übergreift und an den Rohrstutzen anpresst, wobei die Hülse eine gezahnte Ringfläche aufweist, welche an der Zahnung des Rohrstutzens anliegt, und wobei die Hülse unverschiebbar mit der Außenseite des Kabelmantels verbunden ist.

Ein derartiges elektrisches Gerät ist aus der deutschen Gebrauchsmusterschrift DE 20 2007 001070 U1 bekannt.

Aus der deutschen Gebrauchsmusterschrift DE 201 16 680 U1 ist eine elektrische Verkabelung eines elektrischen Gerätes bekannt. Zur Herstellung der Verkabelung ist ein Rohrstutzen mit einem Flanschteil vorgesehen. Der Rohrstutzen ist in eine Öffnung in einer Gehäusewand eingesetzt und durch eine auf den Rohrstutzen aufgeschraubte Mutter an der Gehäusewand befestigt. Zur Befestigung des Kabels ist ein hohlzylindrischer Stutzen zwischen den Kabelmantel und die Kabeladern geschoben, der durch eine auf den Kabelmantel aufgequetschte Hülse gehalten wird. Der hohlzylindrischer Stutzen ist formschlüssig mit einem Formteil verbunden ist, welches eine gezahnte Stirnfläche aufweist, die von einer auf den Rohrstutzen aufschraubbaren Überwurfmutter gegen die ebenfalls gezahnte Stirnfläche des Rohrstutzen gepresst wird. Ein ringförmiger Deckelbereich der Überwurfmutter drückt in axialer Richtung gegen einen Dichtungsring, der in einer Ringnut des Formteils einsitzt.

Die vorbekannte elektrische Verkabelung schafft eine abgedichtete, verdrehsichere und zugentlastete Kabeldurchführung am Gehäuse eines elektrischen Gerätes. Allerdings ist die Anzahl der zu verbindenden Teile und der Montageaufwand zur Herstellung der Verkabelung bei diesem Gerät relativ hoch.

Es stellte sich die Aufgabe, ein elektrisches Gerät mit einer feuchtigkeitsdichten, verdrehsicheren und zugentlasteten Kabeldurchführung zu schaffen, welches mit einem geringeren Aufwand herstellbar und montierbar ist.

Die Aufgabe wird erfindungsgemäß dadurch gelöst, dass der Rohrstutzen einstückig mit der Gehäusewand ausgebildet ist, dass die Hülse als einstückig geformtes Metallteil ausgebildet ist, und dass die Hülse auf den Kabelmantel aufgecrimpt ist und einen Crimpabschnitt aufweist, der im montierten Zustand in die Durchgangsöffnung des Rohrstutzens eingeschoben ist.

Vorteilhaft ist, dass der Rohrstutzen einstückig an eine Gehäusewand angeformt ist und daher nicht auf aufwendige Weise an das Gehäuse zu montieren ist, wodurch sich ein erster Kostenvorteil gegenüber vorbekannten Ausführungen ergibt.

Weitere Kostenvorteile ergeben sich dadurch, dass mit einer Überwurfmutter, einer einfach als einstückig geformtes Metallteil ausgebildeten Hülse und einer Dichtung nur wenige Einzelteile zur Befestigung des Kabels am Rohrstutzen benötigt werden. Diese Einzelteile lassen sich zudem durch einfaches Aufschieben auf das Kabel vormontieren. Lediglich die Hülse erfordert eine unverschiebliche Befestigung am Kabelmantel, die auf besonders vorteilhafte Weise durch Crimpen eines hülsenförmigen Abschnitts der Hülse auf der Außenseite des Kabelmantels hergestellt wird. Das Crimpen ermöglicht eine schnelle und einfache Befestigung der Hülse, ohne dass sich die Hülse in den Kabelmantel oder die unter dem Kabelmantel liegenden Kabeladern einschneidet.

Die Dichtung erfordert weder an der Hülse noch am Kabel eine besondere Befestigung. Sie wird durch einfaches Aufschieben auf das Kabel unmittelbar vor der Hülse positioniert.

In einer besonders vorteilhaften Ausgestaltung weist die Innenwand der hohlzylinderförmigen Überwurfmutter angeformte Zähne oder Rasthaken auf, die mit entsprechend geformten Rasthaken oder Zähnen an der Mantelfläche des Rohrstutzens Rastverbindungen herstellen können, durch die die Schraubverbindung zwischen der Überwurfmutter und dem Rohrstutzen gesichert wird.

Besonders vorteilhaft ist es, wenn die Zähne und/oder die Rasthaken asymmetrisch geformt sind und für die beiden Drehrichtungen unterschiedliche Steigungen aufweisen. Hierdurch kann das Anschrauben der Überwurfmutter mit einem bedeutend geringeren Kraftaufwand erfolgen ais das Lösen.

Im folgenden soll ein Ausführungsbeispiel eines erfindungsgemäßen elektrischen Geräts anhand der Zeichnung dargestellt und erläutert werden.

Es zeigen
- Figur 1: ein Abschnitt eines Gehäuses mit einem anzufügenden Kabel,
- Figur 2: einen Rohrstutzen mit einer angefügten Hülse,
- Figur 3: ein an das Gehäuse montiertes Kabel,
- Figur 4: eine Schnittansicht der Figur 3,
- Figur 5: einen Querschnitt durch eine auf den Rohrstutzen aufgeschraubte Überwurfmutter.

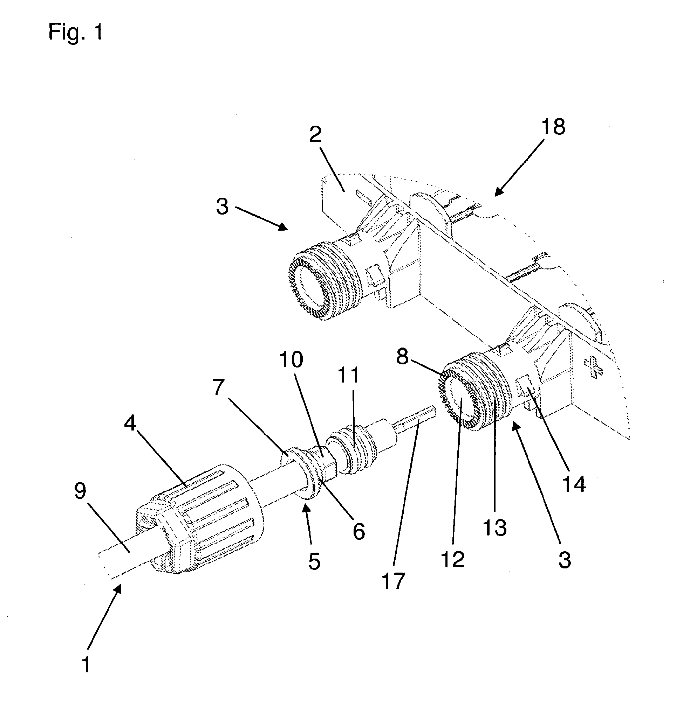

Die Figur 1 zeigt eine Teilansicht eines Gehäuses 18 und ein bereits vormontiertes, mit dem Gehäuse 18 zu verbindendes Kabel 1. An einer Gehäusewand 2 sind zwei Rohrstutzen 3 einstückig angeformt, so dass zwei Kabel 1 mit dem Gehäuse 18 verbunden werden können. Jeder Rohrstutzen 3 weist eine Durchgangsöffnung 12 auf, die bis ins Innere des Gehäuses 18 geführt ist. Auf der Stirnfläche jedes Rohrstutzens 3 ist jeweils eine angeformte Zahnung 8 erkennbar. Die Mantelflächen der Rohrstutzen 3 weisen jeweils in einem vorderen Abschnitt ein Gewinde 13 und an einem gehäusenäheren Abschnitt mehrere Rasthaken 14 auf. Die Rasthaken 14 bilden an den Mantelflächen der Rohrstutzen 3 Schrägen aus, die im Uhrzeigersinn, also in Anschraubrichtung, eine geringere Steigung aufweisen als in der Gegenrichtung.

Vor einem Rohrstutzen 3 ist ein Kabel 1 dargestellt, auf dessen Kabelmantel 9 eine hohlzylinderförmige Überwurfmutter 4, eine Hülse 5 und eine balgförmige Gummidichtung 11 aufgeschoben sind. Die Hülse 5 weist einen das Kabel 1 umgebenden Crimpabschnitt 10 und einen ringförmigen Abschnitt auf, welcher, auf der der Überwurfmutter 4 zugewandten Seite eine ebene Ringfläche 7 und auf der dem Rohrstutzen 3 zugewandten gegenüberliegenden Seite eine gezahnte Ringfläche 6 ausbildet. Der Crimpabschnitt 10 der Hülse 5 ist mittels eines nicht dargestellten Crimpwerkzeugs auf das Kabel 1 aufgequetscht und damit unverschiebbar am Kabelmantel 9 befestigt. Da die Hülse 5 somit eine Crimphülse ausbildet, ist sie vorzugsweise als ein einstückig hergestelltes Metallteil ausgeführt.

Alternativ kann die Hülse 5 auch als ein Kunststoffteil vorgesehen sein, das durch Umspritzen des Kabelmantels 9 hergestellt und unverschiebbar am Kabelmantel 9 befestigt ist. In einer weiteren vorteilhaften Ausführungsform kann eine Hülse 5, die aus Metall oder Kunststoff gefertigt ist, auch durch Kleben unverschiebbar am Kabelmantel 9 befestigt werden.

Das Kabel 1 mit der befestigten Hülse 5 und der durch Aufschieben vormontierten Überwurfmutter 4 und Dichtung 11 wird durch Einschieben in die Durchgangsöffnung 12 des Rohrstutzens 3 mit dem Gehäuse 18 des elektrischen Gerätes verbunden. Die abisolierte Kabelader 17 am vorderen Kabelabschnitt wird anschließend durch Verbindungselemente im Inneren des Gehäuses 18 auf eine übliche Weise kontaktiert.

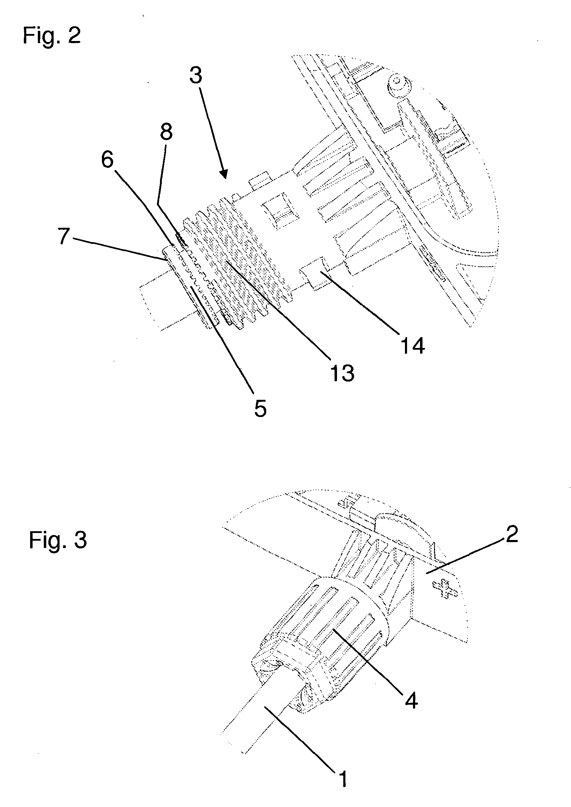

Der nach dem Einschieben des Kabels 1 in den Rohrstutzen 3 erreichte Montagezustand ist in der Figur 2 dargestellt. Die Dichtung 11 und der Crimpabschnitt 10 der Hülse 5 sind vollständig von der Durchgangsöffnung 12 des Rohrstutzens 3 aufgenommen. Die gezahnte Ringfläche 6 der Hülse 5 liegt kurz vor der am Rohrstutzen 3 angeformte Zahnung 8. Hierdurch kann in dieser Montagephase die Drehlage des Kabels 1 relativ zum Rohrstutzen 3 noch korrigiert werden.

Durch Aufschrauben der Überwurfmutter 4 auf das Gewinde 13 an der Mantelfläche des Rohrstutzens 3 wird die gezahnte Ringfläche 6 der Hülse 5 gegen die Zahnung 8 des Rohrstutzens 3 gepresst, wodurch das Kabel 1 nun verdrehsicher am Gehäuse 18 befestigt ist. Da die Hülse 5 durch die an ihrer ebenen Ringfläche 7 anliegende Überwurfmutter auch axial unverschiebbar am Rohrstutzen 3 befestigt ist, ist das mit der Hülse 5 fest verbundene Kabel 1 nun auch zugentlastet am Gehäuse 18 angeordnet. Der damit erreichte Montagezustand ist in der Figur 3 dargestellt.

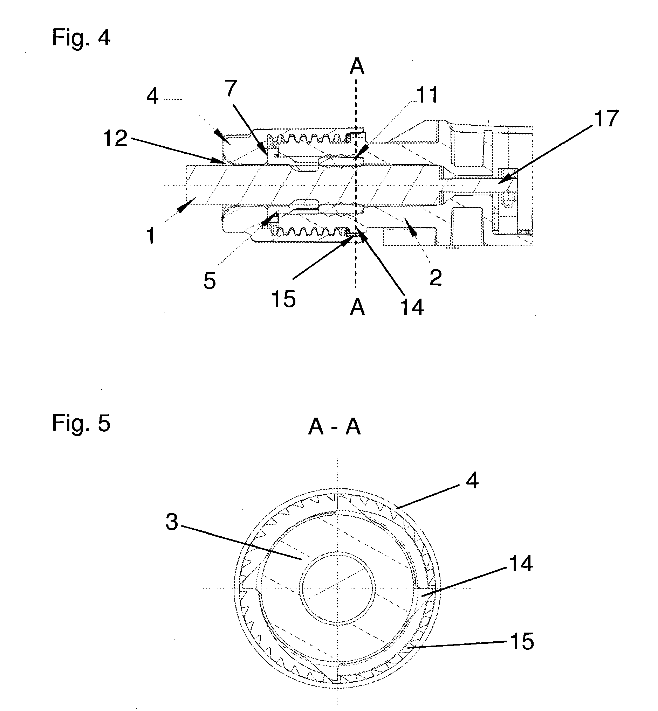

Nach dem Kontaktieren der Kabelader 17 im Inneren des Gehäuses 18 ergibt sich die in der Figur 4 in einer Schnittansicht dargestellte Anordnung. Erkennbar ist, dass die Dichtung 11 und der Crimpabschnitt 10 der Hülse 5 in einem Abschnitt der Durchgangsöffnung 12 mit einem relativ breiten Querschnitt angeordnet sind, während sich die Weite der Durchgangsöffnung 12 hinter der Dichtung 11 auf die Querschnittsweite des Kabels 1 verringert. Hierdurch wird eine optimale Abdichtung der Durchgangsöffnung 12 durch die Dichtung 11 erreicht.

Eine Querschnittsansicht durch die Schnittebene A-A der Figur 4 mit Blickrichtung von der Seite des Gehäuses 18 zeigt die Figur 5. Dargestellt sind an der Mantelfläche des Rohrstutzens 3 angeformte Rasthaken 14 sowie an der Innenflächen der Überwurfmutter 4 angeformte Zähne 15, die beim Aufschrauben der Überwurfmutter 4 auf den Rohrstutzen 3 miteinander verrasten. Ersichtlich ist, dass sowohl die Rasthaken 14 als auch die Zähne 15 asymmetrisch geformt sind und entlang der Umfangsrichtung Schrägen ausbilden, die je nach Umlaufrichtung unterschiedliche Steigungen aufweisen. Hierdurch kann das Aufschrauben der Überwurfmutter 4 auf den Rohrstutzen 3 mit einem relativ geringen Kraftaufwand erfolgen, während das Lösen der Schraubverbindung einen hohen Kraftaufwand erfordert oder sogar nur unter Zerstörung der durch die Rasthaken 14 und Zähne 15 hergestellten Rastverbindung möglich ist. Eine derartige Ausgestaltung der Rastmittel 14, 15 ist besonders dann zweckmäßig und vorteilhaft, wenn das Kabel 1 eine hohe Spannung führen kann und daher das Lösen der Kabelverschraubung aus Sicherheitsgründen erschwert werden soll, ohne dabei den Aufwand bei der vorherigen Montage zu vergrößern.

Das erfindungsgemäß ausgebildete elektrische Gerät kann vorzugsweise als Bestandteil einer Photovoltaikanlage zur Anwendung kommen.

### Bezugszeichen

- 1: Kabel
- 2: Gehäusewand
- 3: Rohrstutzen
- 4: Überwurfmutter
- 5: Hülse
- 6: gezahnte Ringfläche
- 7: ebene Ringfläche
- 8: Zahnung
- 9: Kabelmantel
- 10: Crimpabschnitt
- 11: Dichtung
- 12: Durchgangsöffnung
- 13: Gewinde
- 14: Rasthaken
- 15: Zähne
- 16: Innenwand
- 17: Kabelader
- 18: Gehäuse

## Patentansprüche

1. Elektrisches Gerät mit einem Kabel und einer Durchführung des Kabels (1) durch eine Gehäusewand (2),
mit einem an der Gehäusewand (2) angeordneten Rohrstutzen (3), der eine Stirnfläche mit einer Zahnung (8) aufweist,
mit einer Überwurfmutter (4), welche im montierten Zustand eine mit dem Kabel (1) verbundene Hülse (5) übergreift und an den Rohrstutzen (3) anpresst, wobei die Hülse (5) eine gezahnte Ringfläche (6) aufweist, welche an der Zahnung (8) des Rohrstutzens (3) anliegt, und
wobei die Hülse (5) unverschiebbar mit der Außenseite des Kabelmantels (9) verbunden ist,
**dadurch gekennzeichnet,**
**dass** der Rohrstutzen (3) einstückig mit der Gehäusewand (2) ausgebildet ist,
**dass** die Hülse (5) als einstückig geformtes Metallteil ausgebildet ist, und dass die Hülse (5) auf den Kabelmantel (9) aufgecrimpt ist und einen Crimpabschnitt (10) aufweist, der im montierten Zustand in die Durchgangsöffnung (12) des Rohrstutzens (3) eingeschoben ist.

2. Elektrisches Gerät nach Anspruch 1, **dadurch gekennzeichnet, dass** im montierten Zustand eine Dichtung (11) in der Durchgangsöffnung (12) des Rohrstutzens (3) angeordnet ist.

3. Elektrisches Gerät nach Anspruch 1, **dadurch gekennzeichnet, dass** der Rohrstutzen (3) an seiner Mantelfläche angeformte Rasthaken (14) aufweist, und dass die Überwurfmutter (4) an ihrer Innenwand angeformte Zähne (15) aufweist, und dass beim Aufschrauben der Überwurfmutter (4) auf den Rohrstutzen (3) die Rasthaken (14) an den Zähnen (15) verrasten.

4. Elektrisches Gerät nach Anspruch 3, **dadurch gekennzeichnet, dass** die Zähne (15) und/oder die Rasthaken (14) asymmetrisch ausgebildet sind.

5. Elektrisches Gerät nach Anspruch 1, **dadurch gekennzeichnet, dass** das Gehäuse (18) mehrere angeformte Rohrstutzen (3) zur Durchführung jeweils eines Kabels (1) aufweisen.

6. Elektrisches Gerät nach Anspruch 1, **dadurch gekennzeichnet, dass** das Gerät Bestandteil einer Photovoltaikanlage ist.

## Claims

1. Electrical device having a cable and a penetration for the cable (1) through a housing wall (2),
having a pipe socket (3) which is located on the housing wall (2) and has a front face with a serration (8),
having a union nut (4) which, in its assembled state, covers a sleeve (5) connected to the cable (1) and presses against the pipe socket (3), for which purpose the sleeve (5) has a serrated ring area (6) which comes to rest on the serration (8) of the pipe socket (3), and
with the sleeve (5) being non-displaceably connected to the outer surface of the cable sheathing (9)
**characterised in that**
the pipe socket (3) is of a single-piece design with the housing wall (2),
that the sleeve (5) is designed as a metal part made of one piece, and
that the sleeve (5) is crimped onto the cable sheathing (9) and has one crimp section (10) which, in its assembled state, is inserted into the opening (12) of the pipe socket (3).

2. Electrical device according to Claim 1, **characterised in that**, in its assembled state, a seal (11) is located in the opening (12) of the pipe socket (3).

3. Electrical device according to Claim 1, **characterised in that** the pipe socket (3) has snap-in hooks (14) moulded into its outer sheath surface and that the union nut (4) has teeth (15) formed onto its inner wall, and that the snap-in hooks (14) lock in place on the teeth (15) when the union nut (4) is screwed onto the pipe socket (3).

4. Electrical device according to Claim 3, **characterised in that** the teeth (15) and/or the snap-in hooks (14) are of an asymmetric design.

5. Electrical device according to Claim 1, **characterised in that** the housing (18) has several moulded-on pipe sockets (3), each for the passage of one cable (1).

6. Electrical device according to Claim 1, **characterised in that** the device is an element of a photovoltaic installation.

## Revendications

1. Appareil électrique avec un câble et une ouverture pour le passage du câble (1) à travers une paroi (2) du boîtier,
avec un raccord tubulaire (3) qui, disposé sur la paroi (2) du boîtier,
présente une face frontale qui est pourvue d'une denture (8),
avec un écrou-raccord (4) qui, à l'état monté, entoure une douille (5) reliée au câble (1) et la presse sur le raccord tubulaire (3), sachant que la douille (5) est pourvue d'une face annulaire (6) dentée, qui porte contre la denture (8) du raccord tubulaire (3), et
sachant que la douille (5) est reliée, non déplaçable, à la face extérieure de la gaine (9) du câble,
**caractérisé en ce que**,
le raccord tubulaire (3) est formé d'une pièce avec la paroi (2) du boîtier
la douille (5) est réalisée sous la forme d'une pièce métallique, formée d'une pièce, et
que la douille (5) est fixée par sertissage sur la gaine (9) du câble et est pourvue d'une section de sertissage (10) qui, à l'état monté, est introduite dans l'ouverture de passage (12) du raccord tubulaire (3).

2. Appareil électrique selon la revendication 1, **caractérisé en ce que**, à l'état monté, un joint d'étanchéité (11) est disposé dans l'ouverture de passage (12) du raccord tubulaire (3).

3. Appareil électrique selon la revendication 1, **caractérisé en ce que** le raccord tubulaire (3) est pourvu de crochets d'encliquetage (14), qui sont formés sur la surface de sa gaine, et que l'écrou-raccord (4) est pourvu de dents (15), qui sont formées sur sa paroi intérieure, et que les crochets d'encliquetage (14) s'encliquètent dans les dents (15) lors du vissage de l'écrou-raccord (4) sur le raccord tubulaire (3).

4. Appareil électrique selon la revendication 3, **caractérisé en ce que** les dents (15) et / ou les crochets d'encliquetage (14) sont formés asymétriquement.

5. Appareil électrique selon la revendication 1, **caractérisé en ce que** le boîtier (18) présente plusieurs raccords tubulaires (3) formés chacun pour le passage d'un câble (1).

6. Appareil électrique selon la revendication 1, **caractérisé en ce que** l'appareil est un composant d'une installation photovoltaïque.
